# EUROPÄISCHE PATENTSCHRIFT

(11) **EP 2 947 361 B1**
(45) Veröffentlichungstag und Bekanntmachung des Hinweises auf die Patenterteilung: **03.07.2024**
(21) Anmeldenummer: 15166672.4
(22) Anmeldetag: 06.05.2015
(51) Int. Cl.: F16K 31/40, F02M 21/02, F16K 39/02, F16K 31/06

(54) **ELEKTROMAGNETISCH BETÄTIGBARES HOCHDRUCKGASVENTIL**
ELECTROMAGNETICALLY ACTUATED HIGH PRESSURE GAS VALVE
VANNE DE GAZ HAUTE PRESSION À ACTIONNEMENT ÉLECTROMAGNÉTIQUE

(30) Priorität: 16.05.2014 DE 102014106940
(43) Veröffentlichungstag der Anmeldung: 25.11.2015
(73) Patentinhaber: Mesa Parts GmbH, 79853 Lenzkirch (DE)
(72) Erfinder: Gläser, Stefan, Dr., 8598 Bottighofen (CH); Braun, Patrick, 79822 Titisee-Neustadt (DE)
(74) Vertreter: Westphal, Mussgnug & Partner Patentanwälte mbB

(56) Entgegenhaltungen:
- EP-A2- 2 653 763
- WO-A1-96/15926
- DE-B- 1 168 725
- US-A- 3 405 906

## Beschreibung

Die vorliegende Erfindung betrifft ein elektromagnetisch betätigbares Hochdruckgasventil gemäß dem Oberbegriff des Patentanspruchs 1.

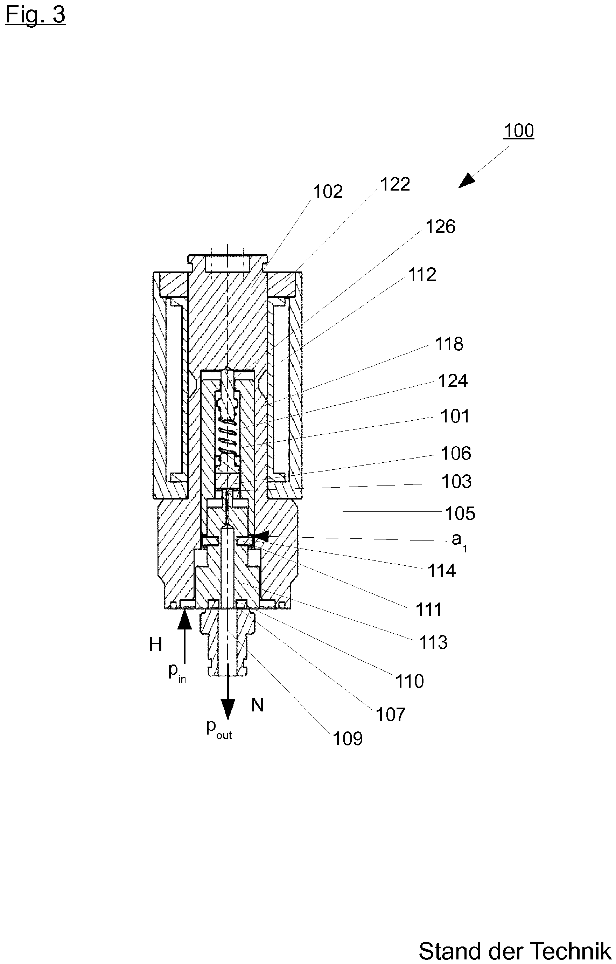

Aus dem Stand der Technik sind verschiedentlich elektromagnetisch betätigbare Hochdruckgasventile bekannt, die als Vorsteuerventil ausgestaltet sind. Bei derartigen Hochdruckgasventilen sind zwischen einer Hochdruckseite und einer Niederdruckseite des Ventils eine Vorsteueröffnung mit einem Vorsteuersitz und eine Hauptöffnung mit einem Hauptsitz angeordnet, wobei der Vorsteuersitz mit einem Vorsteuerdichtelement verschließbar ist und der Hauptsitz mit einem Hauptdichtelement verschließbar ist. Derartige Hochdruckgasventile sind aus der WO 1996/15926 A1, der DE 1 168 725 A und der US 3 405 906 A bekannt. Bei den aus dem Stand der Technik bekannten Hochdruckgasventilen, wie eines in Figur 3 dargestellt ist, werden das Vorsteuerdichtelement und das Hauptdichtelement beide über einen gemeinsamen Anker bewegt, während die Hochdruckgasventile, die in der WO 1996/15926 A1 und der DE 1 168 725 A jeweils das Vorsteuerdichtelement mit einem Vorsteueranker und das Hauptdichtelement mit einem Hauptanker bewegt werden.

Figur 3 zeigt eine Schnittdarstellung eines aus dem Stand der Technik bekannten Hochdruckgasventiles 100, wobei ein Anker 101 in einem Druckrohr 118 angeordnet ist. Das Druckrohr 118 ist in einem Bereich einer Hinterkante des Ankers 101 mit einem umlaufenden Freistich versehen, der derart ausgeführt ist, dass bis auf einen Verbindungssteg ein Doppelkonus zur Flusslenkung zwischen einem hinteren Teil und einem vorderen Teil des Druckrohres gebildet ist. Außenseitig ist an dem Druckrohr eine bestrombare Spule 112 angeordnet, die geeignet ausgebildet ist, den Anker 101 bei Bestromung zu betätigen. Die Spule 112 ist rückseitig mit einem ringförmig ausgebildeten Joch 122 zur Flusslenkung versehen, das ein magnetisches Feld der Spule 112 in Richtung des Druckrohres 118 führt.

Vorderseitig weist das Druckrohr 118 eine umlaufende Stufe auf, die sowohl zur Lenkung des Magnetfeldes als auch zur Abstützung der Spule 112 und zur Befestigung des Hochdruckgasventiles 100, beispielsweise an einem Behälter, ausgebildet ist.

Der Anker 101 ist vorliegend im Wesentlichen hohlzylindrisch ausgebildet, wobei vorderseitig ein Vorsteuerdichtelement 106 in dem Anker 101 angeordnet ist. Das Vorsteuerdichtelement 106 ist geeignet ausgebildet, eine Vorsteuerbohrung 105 mit einem Vorsteuersitz 103, die in einem Übergangsstück 113, an dem vorderseitig ein Hauptdichtelement 110 zum Verschließen einer Hauptöffnung 109 mit einem Hauptsitz 107 ausgebildet ist, zu verschließen. Das Übergangsstück 113 ist, wie Figur 3 entnommen werden kann, mit zwei gegenüberliegend angeordneten Pressstiften 111 versehen, die in eine Bohrung 114 des Ankers 101 eingreifen. Das Hauptdichtelement 110 ist an dem Übergangsstück 113 bspw. in einer Nut angeordnet und geeignet ausgebildet, den Hauptsitz 107 abzudichten.

In einer Geschlossenstellung des in Figur 3 dargestellten Hochdruckgasventiles 100 verschließt das Hauptdichtelement 110 die Hauptöffnung 109 und dichtet an dem umlaufend zu der Hauptöffnung 109 ausgebildeten Hauptsitz 107. Ferner ist in der Geschlossenstellung die Vorsteueröffnung 105 durch das Vorsteuerdichtelement 106 verschlossen, wobei das Vorsteuerdichtelement 106 an dem Vorsteuersitz 103 dichtet. Zwischen den in das Übergangsstück 113 eingepressten Pressstiften 111 und der Bohrung 114 in dem Anker 101 ist in Axialrichtung ein erster Abstand a1, der einer Höhe eines Vorsteuerhubes zum Öffnen des Vorsteuersitzes 103 wenigstens entspricht.

Für ein Öffnen des Vorsteuersitzes wird die Spule 112 derart bestromt, dass der Anker 101 entgegen der in Schließrichtung wirkenden Druckkraft sowie einer in Schließrichtung wirkenden Federkraft der Druckfeder 124 von dem Druckrohr 118 angezogen und damit das in dem Anker 101 angeordnete Vorsteuerdichtelement 106 von dem Vorsteuersitz 103 abgehoben wird. Nach einem Öffnen des Vorsteuersitzes 103 findet durch die Vorsteueröffnung 105 ein Druckausgleich zwischen der Hochdruckseite H und der Niederdruckseite N statt, sodass ein eingangsseitiger Druck pᵢₙ anschließend einem ausgangsseitigen Druck pₒᵤₜ entspricht. Durch diesen Druckausgleich ändern sich die auf das Übergangsstück 113 und das Hauptdichtelement 110 wirkenden Druckkräfte und werden im Wesentlichen kompensiert. Durch eine weitere Bestromung der Spule 112 wird der Anker 101 weiter in das Druckrohr 118 entgegen der Federkraft der Druckfeder 124 gezogen, sodass das Übergangsstück 113 und damit das Hauptdichtelement 110 über die in die Bohrung 114 eingreifenden Pressstifte 111 von dem Hauptsitz 107 abgehoben werden und damit die Hauptöffnung 109 freigegeben wird. Auf diese Weise wird der volle zur Verfügung stehende Querschnitt zwischen der Hochdruckseite H und der Niederdruckseite N eröffnet und es kann eine maximal mögliche Menge an Gas strömen.

Wenn der Anker 101 maximal in das Druckrohr 118 gezogen wurde, befindet er sich in sogenannter Kernlage, das heißt dass eine Hinterkante des Ankers 101 an der Rückseite des Druckrohrs 118, die vorliegend als Kern 102 ausgebildet ist, anliegt.

Bei einer Reduktion des an der Spule 112 anliegenden Stromes verschließt sodann zuerst aufgrund der Federkraft das Vorsteuerdichtelement 106 den Vorsteuersitz 103 und anschließend das Hauptdichtelement 110 den Hauptsitz 107 , sodass sich auf der Hochdruckseite H der Eingangsdruck Pᵢₙ wieder vollständig aufbaut und die Niederdruckseite N gegebenenfalls druckentlastet werden kann.

An den aus dem Stand der Technik bekannten Ventilen wird es als nachteilig empfunden, dass zu einem Zeitpunkt, an dem die größten Druck- und Federkräfte überwunden werden müssen, nämlich zu dem Zeitpunkt, zu dem das Vorsteuerdichtelement 106 von dem Vorsteuersitz 103 abgehoben wird, zwischen dem Anker 101 und dem rückseitig angeordneten Kern 102 der größte Arbeitsluftspalt, das heißt der größte Abstand zwischen dem Anker 101 und dem rückseitig angeordneten Kern 102, vorliegt. Da eine maximal verfügbare Kraft des Elektromagneten mit zunehmendem Arbeitsluftspalt exponentiell abnimmt, muss das Spulensystem auf diese maximal notwendige Kraft bei diesem maximalen Arbeitsluftspalt dimensioniert werden, so dass Spulen mit hohen Ampèrewindungszahlen notwendig sind. Dies wird als Nachteil empfunden.

Ferner wird es als Nachteil empfunden, dass auftretende Längentoleranzen betreffend eine Tiefe der Bohrung in dem Druckrohr 118, Längentoleranzen des Ankers 101, der Bohrung 114 in dem Anker 101 sowie Längentoleranzen des Übergangsstücks 113sowie im Bereich des Hauptdichtelements 105 und ferner bei der Positionierung des Hauptsitzes 107 durch die serielle Anordnung dieser Bauelemente additiv wirken und somit vergleichsweise große Sicherheitspuffer berücksichtigt werden müssen.

Hier setzt die vorliegende Erfindung an.

Es ist die Aufgabe der vorliegenden Erfindung, ein elektromagnetisch betätigbares Hochdruckgasventil zur Verfügung zu stellen, das die aus dem Stand der Technik bekannten Nachteile nicht aufweist.

Diese Aufgabe wird durch ein elektromagnetisch betätigbares Hochdruckgasventil mit den Merkmalen des Patentanspruchs 1 gelöst.

Weiterbildungen sind Gegenstand abhängiger Patentansprüche.

Ein erfindungsgemäßes elektromagnetisch betätigbares Hochdruckgasventil, das als Vorsteuerventil mit einem Vorsteuersitz und einer Vorsteueröffnung und einem Hauptsitz mit einer Hauptöffnung ausgestaltet ist, wobei die Vorsteueröffnung eine Hochdruckseite mit einer Niederdruckseite des Ventils verbindet und durch ein Vorsteuerdichtelement verschließbar ist, die Hauptöffnung die Hochdruckseite mit der Niederdruckseite des Ventils verbindet und durch ein Hauptdichtelement verschließbar ist und das Ventil einen Vorsteueranker, der auf das Vorsteuerdichtelement wirkt, und der über eine erste Druckfeder in Schließrichtung vorgespannt ist, und einen Hauptanker, der auf das Hauptdichtelement wirkt, aufweist, wobei der Hauptanker in Schließrichtung federbelastet ist, das Ventil eine bestrombare Spule aufweist, die geeignet ausgebildet und angeordnet ist, auf den Vorsteueranker und den Hauptanker derart zu wirken, dass ein Vorsteuerhub, bei dem allein der Vorsteueranker bewegt wird, und ein Haupthub, bei dem zumindest der Hauptanker bewegt wird, voneinander unabhängig sind und der Vorsteueranker wenigstens teilweise innerhalb und konzentrisch zu dem Hauptanker angeordnet ist, zeichnet sich dadurch aus, dass eine zweite Druckfeder vorgesehen ist, die in Schließrichtung auf den Hauptanker oder ein damit verbundenes Bauteil wirkt.

Dadurch, dass das erfindungsgemäße Ventil die Vorsteuerfunktion zum Öffnen der Vorsteueröffnung von einem Öffnen der Hauptöffnung separiert und hierfür zwei separate Anker vorsieht, auf die die gleiche Spule wirkt, wird es ermöglicht, den Vorsteuerhub und den Haupthub voneinander zu trennen und abhängig von den herrschenden Umgebungsbedingungen separat anzusteuern.

Eine Platz sparende Anordnung wird geschaffen, wenn der Vorsteueranker wenigstens teilweise innerhalb und konzentrisch zu dem Hauptanker angeordnet ist.

Es ist dabei vorteilhaft, wenn der Vorsteueranker einen ersten Arbeitsluftspalt mit einer ersten Spalthöhe aufweist und der Hauptanker einen zweiten Arbeitsluftspalt mit einer zweiten Spalthöhe aufweist, wobei der erste und der zweite Arbeitsluftspalt unterschiedliche Spalthöhen aufweisen können. Auf diese Weise ist es insbesondere möglich, dass die erste Spalthöhe kleiner als die zweite Spalthöhe ist, was dazu führt, dass durch eine Reduktion der Spalthöhe für den Vorsteuerhub für diesen aufgrund der reduzierten Spalthöhe eine exponentiell mit der Reduktion der Spalthöhe steigende Kraft zur Verfügung steht.

Alternativ kann die erste Spalthöhe größer als die zweite Spalthöhe sein, was einerseits immer noch eine Reduktion der Spalthöhe für den Vorsteuerhub ermöglicht, aber andererseits erlaubt, dass die Vorsteueröffnung auch nach einem Ausführen des Haupthubes unverschlossen bleibt, da das Vorsteuerdichtelement durch eine entsprechende Auslegung der Spalthöhen diese nicht wieder verschließt.

Bei den beiden vorgenannten Varianten ist es außerdem vorteilhaft, dass sich der Vorsteueranker nach einem Ausführen des Vorsteuerhubes in Kernlage befindet, das heißt dass der Anker an einem innerhalb der Spule angeordneten Kern anliegt und damit eine Reduktion des anliegenden Stromes zur Erzeugung einer Haltekraft möglich ist. Außerdem können bei im Vergleich zum Stand der Technik gleich dimensionierter Spule und damit gleichem Bauraum und Energiebedarf höhere Kräfte zum öffnen des Ventils erreicht werden. Alternativ kann bei gleichbleibenden Kräften ein geringerer Bauraum und/oder eine verringerte Energieaufnahme der Spule realisiert werden.

In einer günstigen Ausgestaltungsform ist dabei der Hauptanker im Wesentlichen rohrförmig ausgestaltet und der Vorsteueranker in diesem aufgenommen und geführt. Auf diese Weise wird eine Platz sparende Anordnung erreicht, die auch magnetisch günstig ansteuerbar ist, sodass der Vorsteuerhub und der Haupthub voneinander entkoppelt werden können.

Gemäß der Erfindung ist der Vorsteueranker in Schließrichtung federbelastet. Es können hierfür beispielsweise Druckfedern vorgesehen sein, die in Schließrichtung auf den jeweiligen Anker oder ein damit in Wirkverbindung stehendes Bauteil wirken. Durch die oben beschriebenen höheren Kräfte zum Öffnen des Ventils ist es auch möglich im Vergleich zum Stand der Technik stärkere Federn zum Schließen der Ventile zu verwenden, sodass höhere Flächenpressungen an den Dichtelementen erreicht werden. Hierducht wird die Verwendung von Dichtelementen aus härteren Dichtmaterialien ermöglicht, was den Einsatz von Materialien mit geringerer Tieftemperaturverhärtung und/oder höherer Verschleißfestigkeit ermöglicht. Alternativ kann bei gleichbleibenden Kräfteverhältnissen ein kleinerer Bauraum und/oder eine geringere Energieaufnahme der Spule realisiert werden.

Für eine magnetische Ansteuerung des Hochdruckgasventiles ist es günstig, wenn der erste Arbeitsluftspalt und der zweite Arbeitsluftspalt magnetisch parallel angeordnet sind. Auf diese Weise wird es ermöglicht, dass durch gezielte Dimensionierung der Luftspalte sowie von im Bereich der Arbeitsluftspalte angeordneten Elementen zur Flusslenkung eine gezielte und entkoppelte Ansteuerung der einzelnen Hübe in Abhängigkeit von den herrschenden Umgebungsbedingungen ermöglicht wird.

Vorteilhafterweise sind der Hauptanker und der Vorsteueranker in einem Druckrohr angeordnet und gelagert. Auf diese Weise wird eine hervorragende Abdichtung gegenüber der Umgebung erreicht und mit großer Zuverlässigkeit ein Gasaustritt verhindert.

In einer Weiterbildung weist das Druckrohr wenigstens eine Einrichtung zur Lenkung eines Magnetfeldes auf. Diese kann beispielsweise als Konus zur Lenkung des Magnetfeldes, als Unterbrechung oder als sonstige Einrichtung, die geeignet ausgebildet ist, das Magnetfeld zu lenken, ausgebildet sein. Wenn ein Konus vorgesehen ist, kann dieser bei einer einstückigen Ausbildung von Druckrohr und Kern durch einen umlaufenden Einstich oder bei einer zweiteiligen Ausbildung von Druckrohr und Kern durch das Vorsehen entsprechender Phasen sowie ein Verlöten von Druckrohr und Kern erzeugt werden kann.

Alternativ kann das Druckrohr auch aus einem nichtmagnetisierbaren Material ausgebildet sein, wobei dann eine Lenkung des Magnetfeldes vorzugsweise über außenliegende Joche, bspw. Ringe oder Scheiben aus magnetisierbarem Material erfolgt, durch die der magnetische Fluss in den magnetisierbaren Kern geleitet bzw. von dem Anker wieder in die magnetisierbare Ummantelung der Spule geleitet wird.

Eine einfache Ausgestaltung der Vorsteueröffnung kann erreicht werden, wenn diese als Bohrung ausgebildet ist und vorzugsweise einen Durchmesser von einigen Zehntel Millimetern, bspw. zwischen 0,2 und 1,2 mm aufweist. Durch eine Ausbildung der Vorsteueröffnung als Bohrung mit dem oben angegebenen Durchmesser kann eine Vergrößerung des Durchmessers im Vergleich zum Stand der Technik erreicht werden, wodurch eine deutlich robustere Ausgestaltung erreicht wird, da insbesondere die Vorsteueröffnung durch kleine Partikel nicht mehr so einfach verschmutzt beziehungsweise verstopft werden kann.

Vorzugsweise weist der erste Arbeitsluftspalt eine magnetisch wirksame Fläche auf, die etwa der magnetisch wirksamen Fläche des zweiten Arbeitsluftspaltes entspricht. Alternativ kann die magnetisch wirksame Fläche des ersten Arbeitsluftspaltes von 20 % bis 200 % der magnetisch wirksamen Fläche des zweiten Arbeitsluftspaltes betragen.

Bei einem Betrieb des vorstehend beschriebenen Hochdruckgasventiles wird abhängig von einer herrschenden Druckdifferenz zwischen der Hochdruckseite und der Niederdruckseite zuerst der Vorsteuerhub (bei hoher Druckdifferenz) oder unmittelbar der Haupthub (bei niedriger Druckdifferenz oder ausgeglichenen Druckverhältnissen) ausgeführt, da die anliegenden magnetischen Kräfte abhängig von den aufgrund der Druckdifferenz wirkenden Druckkräften sowie abhängig von einer Dimensionierung der Druckfedern sowie der vorgesehenen Arbeitsluftspalte für ein Anziehen des Vorsteuerankers oder des Hauptankers und des Vorsteuerankers gleichzeitig ausreichen.

Vorteilhafterweise sind die Höhen und Flächen der Arbeitsluftspalte sowie die Dimensionierung der Druckfedern derart auf eine maximale Druckdifferenz abgestimmt und die Spule geeignet dimensioniert, dass bei Anliegen der maximalen Druckdifferenz zuerst der Vorsteueranker angezogen wird und nach einem Druckausgleich zwischen der Hochdruckseite und der Niederdruckseite der Hauptanker angezogen wird. In jedem Fall ist bei der Dimensionierung zu beachten, dass eine Funktion auch bei annähernd keiner Druckdifferenz erhalten bleibt.

In einer Ausgestaltungsform, bei der die erste Spalthöhe größer als die zweite Spalthöhe gewählt ist, sind die Druckfedern, die Spule und die Anker derart aufeinander abgestimmt, dass bei einem vorgebbaren Druckabfall auf der Niederdruckseite der Hauptanker schließt und der Vorsteueranker und damit die Vorsteueröffnung geöffnet bleibt.

Je nach Sollnennweite der Hauptöffnung kann das Ventil vergrö-ßert oder verkleinert werden. Die jeweiligen Spalthöhen sind daran jeweils anzupassen.

Die vorliegende Erfindung wird nachfolgend unter Bezugnahme auf die beigefügten Figuren eingehend erläutert. Es zeigen:
- Fig. 1a: einen Längsschnitt durch ein erstes Ausführungsbeispiel eines elektromagnetisch betätigbaren Hochdruckgasventiles in geschlossenem Zustand,
- Fig. 1b: das Ventil aus Figur 1a mit geöffnetem Vorsteuersitz,
- Fig. 1c: das Ventil aus den Figuren 1a und 1b mit geöffnetem Hauptsitz,
- Fig. 2a: einen Längsschnitt durch ein zweites Ausführungsbeispiel eines magnetisch betätigbaren Hochdruckgasventiles in geschlossenem Zustand,
- Fig. 2b: das Ventil aus Figur 2a mit geöffnetem Vorsteuersitz,
- Fig. 2c: das Ventil aus den Figuren 2a und 2b mit geöffnetem Hauptsitz, und
- Fig. 3: einen Längsschnitt durch ein elektromagnetisch betätigbares Hochdruckgasventil gemäß dem Stand der Technik (schon behandelt).

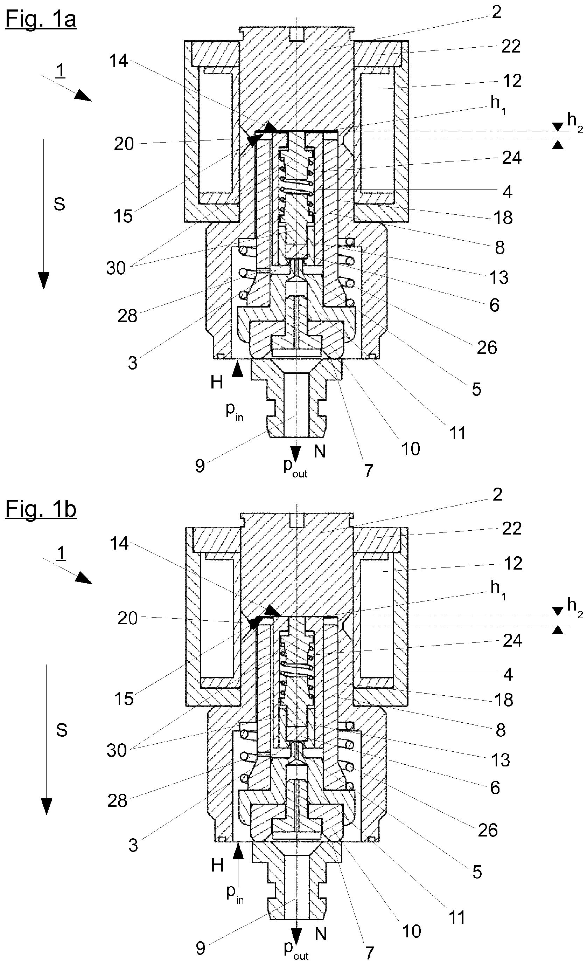

Figur 1a zeigt einen Längsschnitt durch ein erstes Ausführungsbeispiel eines elektromagnetisch betätigbaren Hochdruckgasventiles 1. Das Ventil 1 ist zwischen einer Hochdruckseite H und einer Niederdruckseite N angeordnet, wobei auf der Hochdruckseite H ein Eingangsdruck _{Pin} und auf der Niederdruckseite N ein Ausgangsdruck _{Pout} anliegt. Das gezeigte Ventil kann beispielsweise als sogenanntes Tankentnahmeventil für Gastanks eingesetzt werden.

Das Ventil 1 ist als sogenanntes Vorsteuerventil aufgebaut, wobei zwischen der Hochdruckseite H und der Niederdruckseite N eine Vorsteuerbohrung 5 mit einem Vorsteuersitz 3, der durch ein Vorsteuerdichtelement 6 verschließbar ist, angeordnet ist. Das Vorsteuerdichtelement 6 ist durch einen Vorsteueranker 4 betätigbar, wobei auf diesen das Magnetfeld einer bestrombaren Spule 12 wirkt. Das Vorsteuerdichtelement 6 ist in einer Hülse 13 gelagert und diese ist in den Vorsteueranker 4 eingepresst. Auf diese Weise wird eine zuverlässige und kostengünstige Halterung und Führung des Vorsteuerdichtelementes 6 in dem Vorsteueranker 4 erreicht.

Eine Flusslenkung eines Magnetfeldes der Spule 12 erfolgt im vorliegenden Ausführungsbeispiel über einen rückseitig angeordneten Kern 2, wobei zu dem Kern 2 radial nach außen versetzt ein Joch 22 angeordnet ist. Das Joch 22 ist im vorliegenden Ausführungsbeispiel ringförmig ausgestaltet und sorgt für eine Lenkung des Magnetfeldes der Spule 12 in Richtung des Kernes 2. Der Kern 2 ist in vorderseitiger Richtung einstückig mit einem magnetisierbaren Druckrohr 18 ausgebildet, wobei zwischen dem Kern 2 und dem Druckrohr 18 durch einen umlaufenden Einstich ein Doppelkonus 20 gebildet ist. Das Druckrohr 18 ist in Axialrichtung gestuft ausgebildet, wobei auch geeignete andere Formen denkbar sind. Alternativ zu einem Konus oder Doppelkonus 20 kann das Druckrohr auch mit anderen geeigneten Mitteln zur Magnetfeldlenkung ausgebildet sein. Ausschlaggebend ist, dass bei bestromter Spule eine Sättigung oder anderweitig eine magnetische Trennung erreicht wird.

In dem Druckrohr 18 ist ein Hauptanker 8 gelagert, der den Vorsteueranker 4 außenseitig umgreift und gleichzeitig lagert. Vorderseitig ist an dem Hauptanker 8 ein Übergangsstück 11 angeordnet, durch das die Vorsteueröffnung 5, die vorliegend als Bohrung ausgeführt ist, führt. Rückseitig ist an dem Übergangsstück 11 damit der Vorsteuersitz 3 angeordnet, auf den das Vorsteuerdichtelement 6 wirkt. In dem Hauptanker 8 ist als Zuleitung zur Vorsteueröffnung 5 eine Radialbohrung 28 vorgesehen, durch die Gas von der Hochdruckseite unmittelbar an den Vorsteuersitz 3 bei einem Öffnen durch die Vorsteueröffnung 5 strömen kann.

Insgesamt ist damit festzuhalten, dass der Vorsteueranker 4 konzentrisch zu dem Hauptanker 8 angeordnet und in diesem gelagert ist.

Vorderseitig ist an dem Übergangsstück 11 ein Hauptdichtelement 10 angeordnet, das auf einen Hauptsitz 7 wirkt und damit eine Hauptöffnung 9 in Richtung der Niederdruckseite N verschließt.

Der Vorsteueranker 4 ist über eine Druckfeder 24, die im vorliegenden Ausführungsbeispiel über vorder- und rückseitig angeordnete Lagerbolzen 30 gehaltert ist, in Schließrichtung S vorgespannt und rückseitig an dem Kern 2 abgestützt. Ebenso ist der Hauptanker 8 über eine Druckfeder 26, die auf das Übergangsstück 11, das in den Hauptanker 8 eingepresst ist, an der umlaufenden Stufe des Druckrohres 18 abgestützt und in Schließrichtung S vorgespannt. Durch die Druckfedern 24, 26 wird unabhängig von herrschenden Druckverhältnissen beziehungsweise Druckdifferenzen zwischen der Hochdruckseite H und der Niederdruckseite N ein zuverlässiges Schließen und Abdichten des Hochdruckgasventiles 1 erreicht.

In dem in Figur 1a dargestellten Ausführungsbeispiel weisen damit der Vorsteueranker 4 und der Hauptanker 8 zwei separate Arbeitsluftspalte 14, 15 auf, wobei dem Vorsteueranker 4 der erste Arbeitsluftspalt 14 und dem Hauptanker 8 der zweite Arbeitsluftspalt 15 zugeordnet ist. Im vorliegenden Ausführungsbeispiel weist der erste Arbeitsluftspalt 14 eine erste Höhe h1 auf, die deutlich geringer als eine zweite Höhe h2 des zweiten Arbeitsluftspaltes 15 gewählt ist. Auf diese Weise entfaltet der Elektromagnet durch die reduzierte Höhe h1 des ersten Arbeitsluftspaltes 14 für ein Öffnen des Vorsteuersitzes 3 eine gegenüber dem Stand der Technik deutlich erhöhte Kraftwirkung, was sich positiv auf die Auslegung des vorliegenden Hochdruckgasventiles 1 auswirkt.

Als deutlicher Vorteil des vorliegenden Ausführungsbeispieles ist anzumerken, dass bei gleichbleibender Dimensionierung der Spule 12 durch die Reduktion der Höhen h1, h2 der Arbeitsluftspalten 14, 15 deutlich größere Kräfte in den Arbeitspunkten des Ventils abgerufen werden können. Trotz einer Aufteilung der magnetisch wirksamen Fläche auf den Vorsteueranker 4 und den Hauptanker 8 kann durch die Reduktion der Höhen h1, h2 der Arbeitsluftspalte 14, 15 eine Erhöhung der Kräfte in den jeweiligen Arbeitspunkten erreicht werden. Dies ist darauf zurückzuführen, dass die maximal verfügbare Kraft mit einer Reduktion der Höhe des Arbeitsluftspaltes exponentiell ansteigt, eine Reduktion der Fläche sich aber nur linear auswirkt.

Auf diese Weise können insgesamt höhere Schließkräfte überwunden werden, was einerseits höhere Druckdifferenzen zwischen der Hochdruckseite H und der Niederdruckseite N ermöglicht, oder andererseits eine robustere Auslegung des Hochdruckgasventiles 1 mit stärker dimensionierten Druckfedern 24, 26 erlaubt. Auf diese Weise können auch bei niedrigeren Druckdifferenzen, beispielsweise bei einem annähernd leeren Gastank, aufgrund der Druckfedern 24, 26 hohe Schließkräfte und damit eine hohe Sicherheit und geringe Leckageraten erzielt werden.

Im geschlossenen Zustand wirken einerseits die durch die Druckdifferenz zwischen der Hochdruckseite H und der Niederdruckseite N herrschenden Druckkräfte als auch die durch die Druckfedern 24, 26 eingeleiteten Kräfte in Schließrichtung und halten das Hochdruckgasventil 1 geschlossen.

Im geschlossenen Zustand des Hochdruckgasventiles 1 beträgt die erste Arbeitsspalthöhe h1 beispielsweise 0,2 mm und die zweite Arbeitsspalthöhe h2 beispielsweise 1,2 mm.

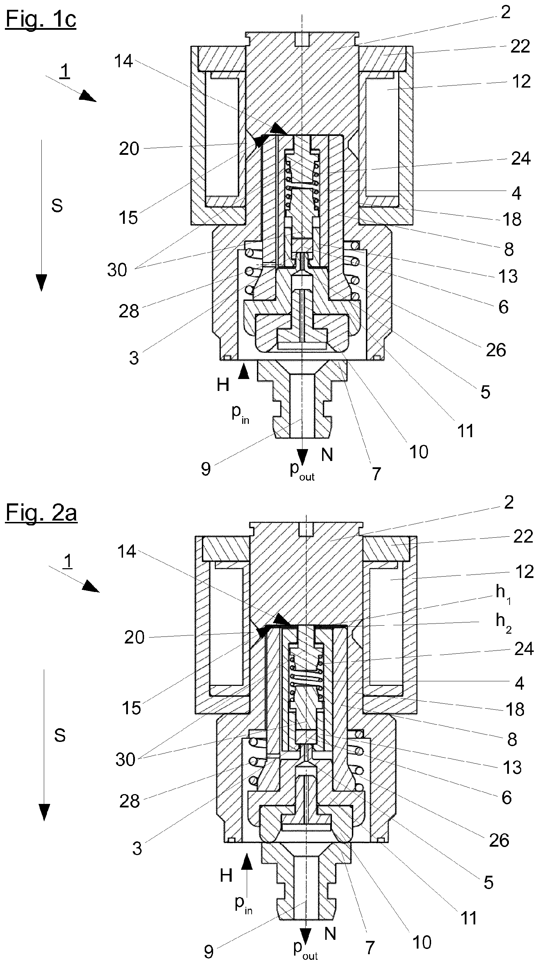

Anhand der folgenden Figuren 1b und 1c wird nun die Funktionsweise des in Figur 1a in geschlossener Position dargestellten Hochdruckgasventiles erläutert.

Figur 1b zeigt das Hochdruckgasventil 1 aus Figur 1a mit geöffnetem Vorsteuersitz 3.

Durch Bestromung der Spule 12 wird ein Magnetfeld induziert, welches sich über das Joch 22 und den Kern 2 zuerst über den Konus 20 und sobald dieser in Sättigung ist über den ersten Arbeitsluftspalt 14 des Vorsteuerankers 4 ausbreitet und über den Hauptanker 8 und dann über das Druckrohr 18 wieder in die Spule 12 eintritt. Durch das anliegende Magnetfeld entsteht eine Kraftwirkung auf den Vorsteueranker 4 in Richtung des Kernes 2, sodass dieser bei ausreichend großem Magnetfeld entgegen der Kraftwirkung der ersten Druckfeder 24 sowie entgegen der auf den Vorsteueranker 4 wirkenden Druckkräfte aufgrund einer Druckdifferenz zwischen dem Eingangsdruck _{Pin} und dem Ausgangsdruck _{Pout} in Richtung des Kernes 2 gezogen wird, bis er mit diesem in Anlage ist. Die Bewegung des Vorsteuerankers 4 wird über die Hülse 13 auf das Vorsteuerdichtelement 6 übertragen, welches dadurch von dem Vorsteuersitz 3 abgehoben wird, sodass die Vorsteueröffnung 5 freigegeben wird. Durch die Radialbohrung 28 sowie die Vorsteuerbohrung 5 erfolgt nunmehr ein Druckausgleich zwischen dem auf der Hochdruckseite H herrschenden Eingangsdruck _{Pin} und dem auf der Niederdruckseite N herrschenden Ausgangsdruck _{Pout}. Durch diesen Druckausgleich wirken eingangs- und ausgangsseitig annähernd identische Drücke, sodass auf den Hauptanker 8 nunmehr annähernd ausschließlich die Federkraft der zweiten Druckfeder 26 wirkt.

Aufgrund der nun reduzierten in Schließrichtung S wirkenden Kräfte ist das Magnetfeld der Spule 12 stark genug, um den Hauptanker 8 in Richtung des Kernes 2 entgegen der Federkraft der zweiten Druckfeder 26 zu ziehen. Auf diese Weise wird das Hauptdichtelement 10 von dem Hauptsitz 7 abgehoben und damit die Hauptöffnung 9, die vorliegend ebenfalls als Bohrung ausgeführt ist, freigegeben.

Diese Situation ist in Figur 1c dargestellt.

Wie der Darstellung in Figur 1c entnommen werden kann, kann jetzt Gas von der Hochdruckseite H auf direktem Wege durch die Hauptöffnung 9 zur Niederdruckseite N strömen. Durch die unterschiedlich große Ausgestaltung der beiden Arbeitsluftspalte 14, 15 gerät der Vorsteuersitz 3 bei einer Bewegung des Hauptankers 8 in Richtung des Kernes 2 in Anlage mit dem Vorsteuerdichtelement 6 und schiebt dieses entgegen der Kraft der ersten Druckfeder 24 weiter in Richtung Kern 2. Die Vorsteueröffnung 5 ist damit wieder verschlossen.

Bei einem Ende der Bestromung der Spule 12 werden sich beide Anker 4, 8 aufgrund der durch die Druckfedern 24, 26 eingeleiteten Kräfte in Schließrichtung S bewegen und damit das Ventil 1 wieder verschließen. Die Hochdruckseite H und die Niederdruckseite N sind dann wieder voneinander getrennt.

Bei dem unter Bezugnahme auf die Figuren 1a bis 1c beschriebenen Ausführungsbeispiel ist als besonderer Vorteil hervorzuheben, dass der erste Arbeitsluftspalt 14 des Vorsteuerankers 4 mit sehr geringer erster Spalthöhe h₁ ausgelegt werden kann, wodurch für ein Öffnen des Vorsteuersitzes 3 besonders hohe Kräfte zur Verfügung stehen.

Figuren 2a bis 2c zeigen ein zweites Ausführungsbeispiel eines elektromagnetisch betätigbaren Hochdruckgasventiles 1, die sich von dem in den Figuren 1a bis 1c beschriebenen Ausführungsbeispiel durch eine unterschiedliche Dimensionierung der Arbeitsluftspalte 14, 15 unterscheiden.

In Figur 2a ist ein Längsschnitt durch das zweite Ausführungsbeispiel des Hochdruckgasventiles 1 gezeigt, wobei das Ventil 1 in geschlossener Stellung dargestellt ist.

In dem vorliegenden Ausführungsbeispiel sind der erste Arbeitsluftspalt 14 und der zweite Arbeitsluftspalt 15 derart dimensioniert, dass die erste Spalthöhe h₁ des ersten Arbeitsluftspaltes 14 größer gewählt ist als die zweite Höhe h₂ des zweiten Arbeitsluftspaltes 15.

Um unnötige Wiederholungen zu vermeiden, wird bezüglich der übrigen Elemente auf die Beschreibung in den Figuren 1a bis 1c Bezug genommen.

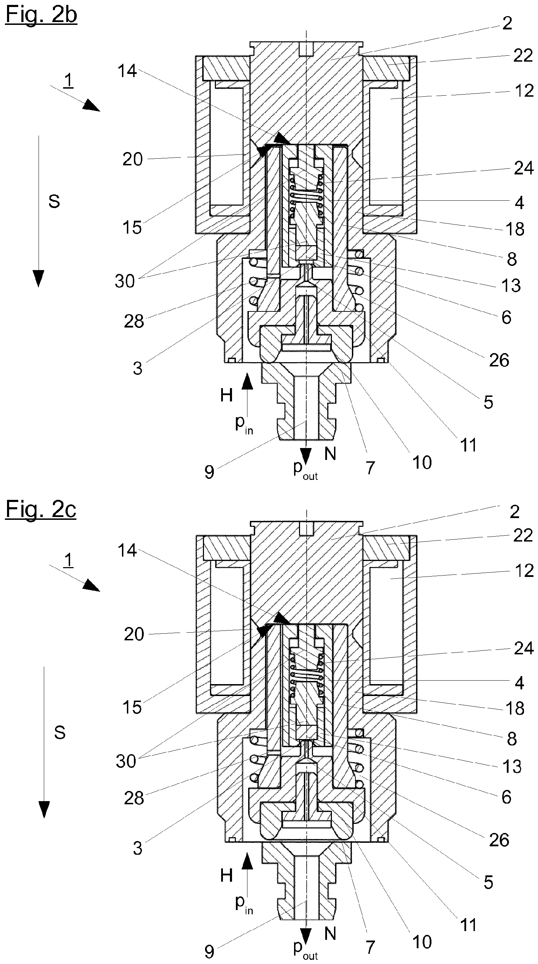

In Figur 2b ist das Ventil 1 mit geöffnetem Vorsteuersitz 3 dargestellt. Wie zuvor bereits beschrieben, wird der Vorsteueranker 4 durch ein in der Spule 12 induziertes Magnetfeld in Richtung des Kerns 2 gezogen, bis er mit dem Kern 2 in Anlage ist. Wie bereits beschrieben, wird in dieser Vorsteuerposition ein Druckausgleich zwischen der Hochdruckseite H und der Niederdruckseite N erreicht, sodass die auf den Hauptanker 8 wirkenden Druckkräfte aufgrund der Druckdifferenz zwischen der Hochdruckseite H und der Niederdruckseite N im Wesentlichen ausgeglichen werden.

In Figur 2c ist das Ventil 1 in geöffneter Stellung, das heißt mit angezogenem Hauptanker 8 und von dem Hauptsitz 7 abgehobenen Hauptdichtelement 10 dargestellt. In dieser Position findet ein direkter Fluidstrom von der Hochdruckseite H zur Niederdruckseite N statt, wobei aber das Vorsteuerdichtelement 6 nach wie vor von dem Vorsteuersitz 3 abgehoben bleibt, da die erste Spalthöhe h₁ des ersten Arbeitsluftspaltes 14 größer gewählt ist als die zweite Höhe h₂ des zweiten Arbeitsluftspaltes 15. Die Vorsteueröffnung 5 ist damit weiterhin freigegeben.

Als Vorteil dieser Ausführungsform kann angesehen werden, dass bei einem Leitungsbruch auf der Niederdruckseite, d.h. wenn auf der Niederdruckseite ein Druckabfall zu verzeichnen ist, das Ventil derart dimensioniert sein kann, dass aufgrund der auftretenden Druckkräfte der Hauptanker 8 nach unten bewegt und damit der Hauptsitz 7 verschlossen wird, während der Vorsteueranker 4 in Kernlage verbleibt und die Vorsteueröffnung 5 damit geöffnet bleibt. Grund hierfür ist, dass der Hauptanker 8 in dieser Situation einerseits mit Hochdruck und anderseits mit einem deutlich niedrigeren Druck beaufschlagt ist und damit Druck- und Federkräfte in Schließrichtung wirken. Der Vorsteueranker 4 dagegen ist beiderseits im Wesentlichen mit Hochdruck beaufschlagt, sodass dieser geöffnet bleibt. Durch eine geeignete Auslegung der vorgenannten Elemente ist die Druckdifferenz, bei der dieses Schließen des Hauptankers 8 eintritt vorgebbar.

### Bezugszeichenliste

- 1: Hochdruckgasventil
- 2: Kern
- 3: Vorsteuersitz
- 4: Vorsteueranker
- 5: Vorsteueröffnung
- 6: Vorsteuerdichtelement
- 7: Hauptsitz
- 8: Hauptanker
- 9: Hauptöffnung

- 10: Hauptdichtelement
- 12: Spule
- 14: erster Arbeitsluftspalt
- 15: zweiter Arbeitsluftspalt
- 18: Druckrohr

- 20: Konus / Doppelkonus
- 22: Joch
- 24: erste Druckfeder
- 26: zweite Druckfeder

- 100: Hochdruckgasventil
- 101: Anker
- 102: Kern
- 103: Vorsteuersitz
- 105: Vorsteueröffnung
- 106: Vorsteuerdichtelement
- 107: Hauptsitz
- 109: Hauptöffnung
- 110: Hauptdichtelement
- 111: Pressstifte
- 112: Spule
- 113: Übergangsstück
- 114: Bohrung
- 118: Druckrohr

- 122: Joch
- 124: Druckfeder
- 126: Stift

- H: Hochdruckseite
- N: Niederdruckseite
- h₁: erste Spalthöhe
- h₂: zweite Spalthöhe
- S: Schließrichtung
- d: Durchmesser
- a₁: erster Abstand
- pᵢₙ: Eingangsddruck
- pₒᵤₜ: Ausgangsdruck

## Patentansprüche

1. Elektromagnetisch betätigbares Hochdruckgasventil (1), das als Vorsteuerventil mit einem Vorsteuersitz (3) und einer Vorsteueröffnung (5) und einem Hauptsitz (7) und einer Hauptöffnung (9) ausgestaltet ist, wobei
- die Vorsteueröffnung (5) eine Hochdruckseite (H) mit einer Niederdruckseite (N) des Ventils (1) verbindet und durch ein Vorsteuerdichtelement (6) verschließbar ist,
- die Hauptöffnung (9) die Hochdruckseite (H) mit der Niederdruckseite (N) des Ventils (1) verbindet und durch ein Hauptdichtelement (10) verschließbar ist, und
- das Ventil (1) einen Vorsteueranker (4), der auf das Vorsteuerdichtelement (6) wirkt und der über eine erste Druckfeder (24) in Schließrichtung (S) vorgespannt ist, und
- einen Hauptanker (8), der auf das Hauptdichtelement (10) wirkt, aufweist, wobei der Hauptanker (8) in Schließrichtung (S) federbelastet ist,
- wobei das Ventil (1) eine bestrombare Spule (12) aufweist, die geeignet ausgebildet und angeordnet ist, auf den Vorsteueranker (4) und den Hauptanker (8) derart zu wirken, dass ein Vorsteuerhub, bei dem alleine der Vorsteueranker (4) bewegt wird und ein Haupthub, bei dem zumindest der Hauptanker (8) bewegt wird, voneinander unabhängig sind, und
- wobei der Vorsteueranker (4) wenigstens teilweise innerhalb und konzentrisch zu dem Hauptanker (8) angeordnet ist,
**dadurch gekennzeichnet, dass** eine zweite Druckfeder (26) vorgesehen ist, die in Schließrichtung (S) auf den Hauptanker (8) oder ein damit verbundenes Bauteil wirkt.

2. Hochdruckgasventil (1) gemäß Patentanspruch 1,
**dadurch gekennzeichnet, dass** der Vorsteueranker (4) einen ersten Arbeitsluftspalt (14) mit einer ersten Spalthöhe (h₁) aufweist und der Hauptanker (8) einen zweiten Arbeitsluftspalt (15) mit einer zweiten Spalthöhe (h₂) aufweist und der erste und der zweite Arbeitsluftspalt (14, 15) unterschiedliche Spalthöhen (h₁, h₂) aufweisen können.

3. Hochdruckgasventil (1) gemäß Anspruch 2,
**dadurch gekennzeichnet, dass** die erste Spalthöhe (h1) kleiner als die zweite Spalthöhe (h2) ist.

4. Hochdruckgasventil (1) gemäß Anspruch 2,
**dadurch gekennzeichnet, dass** die erste Spalthöhe (h1) größer als die zweite Spalthöhe (h2) ist.

5. Hochdruckgasventil (1) gemäß einem der vorhergehenden Ansprüche,
**dadurch gekennzeichnet, dass** der Vorsteueranker (4) in dem Hauptanker (8) geführt ist.

6. Hochdruckgasventil (1) gemäß einem der Ansprüche 2 bis 4,
**dadurch gekennzeichnet, dass** der erste Arbeitsluftspalt (14) und der zweite Arbeitsluftspalt (15) magnetisch parallel angeordnet sind.

7. Hochdruckgasventil (1) gemäß einem der vorhergehenden Ansprüche,
**dadurch gekennzeichnet, dass** der Hauptanker (8) oder der Hauptanker (8) und der Vorsteueranker (4) in einem Druckrohr (18) angeordnet und gelagert sind.

8. Hochdruckgasventil (1) gemäß Anspruch 7,
**dadurch gekennzeichnet, dass** das Druckrohr (18) aus magnetisch nichtleitendem Material gefertigt ist.

9. Hochdruckgasventil (1) gemäß Anspruch 7,
**dadurch gekennzeichnet, dass** das Druckrohr (18) aus magnetisch leitendem Material gefertigt ist und wenigstens eine Einrichtung zur Leitung eines magnetischen Flusses, insbesondere einen Konus (20) aufweist.

10. Hochdruckgasventil (1) gemäß einem der vorhergehenden Ansprüchen,
**dadurch gekennzeichnet, dass** die Vorsteueröffnung (5) als Bohrung ausgebildet ist und vorzugsweise einen Durchmesser (d) von einigen Zehntel Millimetern, vorzugsweise zwischen 0,2 mm und 1,2 mm aufweist.

11. Hochdruckgasventil (1) gemäß einem der Ansprüche 2 bis 10,
**dadurch gekennzeichnet, dass** der erste Arbeitsluftspalt (14) eine magnetisch wirksame Fläche aufweist, die zwischen 20 % und 200 % der magnetisch wirksamen Fläche des zweiten Arbeitsluftspaltes (15) entspricht, wobei die Flächen vorzugsweise etwa gleich groß sind.

12. Hochdruckgasventil (1) gemäß einem der Ansprüche 3 bis 10,
**dadurch gekennzeichnet, dass** die erste Höhe (h1) zwischen 0,1 mm und 1,0 mm und die zweite Höhe (h2) zwischen 0,3 mm und 2,0 mm beträgt.

13. Hochdruckgasventil (1) gemäß einem der Ansprüche 4 bis 12,
**dadurch gekennzeichnet, dass** die Druckfedern (24, 26), die Spule (12) und die Anker (4, 8) derart abgestimmt sind, dass bei einem Druckabfall auf der Niederdruckseite (N) der Hauptanker (8) schließt und der Vorsteueranker (4) geöffnet bleibt.

## Claims

1. Electromagnetically actuated high pressure gas valve (1) which is implemented as a pilot control valve having a pilot seat (3) and a pilot orifice (5) and a main seat (7) and a main orifice (9), wherein
- the pilot orifice (5) connects a high pressure side (H) of the valve (1) with a low pressure side (N) and can be closed by means of a pilot sealing element (6),
- the main orifice (9) connects the high pressure side (H) of the valve (1) with the low pressure side (N) and can be closed by means of a main sealing element (10),
- the valve (1) comprises a pilot anchor (4), which acts on the pilot sealing element (6) and which is biased in the closing direction (S) by means of a first compression spring (24), and
- a main anchor (8), which acts on the main sealing element (10), wherein the main anchor (8) is spring loaded in the closing direction (S),
- wherein the valve (1) comprises a coil (12), which can be supplied with a current, and which is suitably implemented and arranged to act on the pilot anchor (4) and the main anchor (8) such that a pilot stroke, during which only the pilot anchor (4) is moved, and a main stroke, during which at least the main anchor (8) is moved, are independent of each other, and
- wherein the pilot anchor (4) is at least partially arranged inside of and concentric with the main anchor (8),
**characterized in that** a second compression spring (26), or a component connected thereto, is provided which acts on the main anchor (8) in the closing direction (S).

2. High pressure gas valve (1) in accordance with claim 1,
**characterized in that**
the pilot anchor (4) comprises a first working air gap (14), having a first gap height (h₁), and **in that** the main anchor (8) comprises a second working air gap (15), having a second gap height (h₂), and **in that** the first and the second working air gaps (14, 15) may comprise different gap heights (h₁, h₂).

3. High pressure gas valve (1) in accordance with claim 2,
**characterized in that**
the first gap height (h₁) is smaller than the second gap height (h₂).

4. High pressure gas valve (1) in accordance with claim 2,
**characterized in that**
the first gap height (h₁) is larger than the second gap height (h₂).

5. High pressure gas valve (1) in accordance with any of the preceding claims,
**characterized in that**
the pilot anchor (4) is inserted in the main anchor (8).

6. High pressure gas valve (1) in accordance with any of claims 2 to 4,
**characterized in that**
the first working air gap (14) and the second working air gap (15) are arranged magnetically parallel.

7. High pressure gas valve (1) in accordance with any of the preceding claims,
**characterized in that**
the main anchor (8)j or the main anchor (8) and the pilot anchor (4) are arranged and mounted in a pressure pipe (18).

8. High pressure gas valve (1) in accordance with claim 7,
**characterized in that**
the pressure pipe (18) is made of magnetically non-conductive material.

9. High pressure gas valve (1) in accordance with claim 7
**characterized in that**
the pressure pipe (18) is made of magnetically conductive material and **in that** is comprises a system for conducting a magnetic flux, in particular a conus (20).

10. High pressure gas valve (1) in accordance with any of the preceding claims,
**characterized in that** the pilot orifice (5) is implemented as a bore hole and preferably comprises a diameter (d) of a few tenths of millimeters, preferably between 0.2 mm and 1.2 mm.

11. High pressure gas valve (1) in accordance with any of claims 2 to 10,
**characterized in that**
the first working air gap (14) comprises a magnetically active surface, which corresponds to between 20% and 200% of the magnetically active surface of the second working air gap (15), wherein the surfaces are preferably of approximately the same size.

12. High pressure gas valve (1) in accordance with any of claims 3 to 10,
**characterized in that**
the first height (h₁) lies between 0.1 mm and 1.0 mm, and **in that** the second height (h₂) lies between 0.3 mm and 2.0 mm.

13. High pressure gas valve (1) in accordance with any of claims 4 to 12,
**characterized in that**
the compression springs (24, 26), the coil (112) and the anchors (4, 8) are adjusted such that, in case of a loss of pressure on the low pressure side (N), the main anchor (8) closes and the pilot anchor (4) remains open.

## Revendications

1. Vanne de gaz à haute pression à commande électromagnétique (1) réalisée comme soupape pilote avec un siège de commande pilote (3) et une ouverture de commande pilote (5) ainsi qu'un siège principal (7) et une ouverture principale (9),
- l'ouverture de commande pilote (5) reliant le côté haute pression (H) au côté basse pression (N) de la vanne (1) et se fermant par un joint de commande pilote (6),
- l'ouverture principale (9) reliant le côté haute pression (H) au côté basse pression (N) de la vanne (1) et se fermant avec un joint principal (10), et
- la vanne (1) a un induit de commande pilote (4) agissant sur le joint de commande pilote (6) et précontraint par un premier ressort de compression (24) dans le sens de la fermeture (S), et
- un induit principal (8) agissant sur le joint principal (10), l'induit principal (8) étant chargé par un ressort dans le sens de la fermeture (S),
- la vanne (1) a une bobine (12) susceptible d'être alimentée, qui est réalisée et disposée de façon appropriée pour agir sur l'induit de commande pilote (4) et l'induit principal (8) pour qu'une course de commande pilote (8) pour laquelle seul l'induit de commande pilote (4) est déplacé et une course principale pour laquelle au moins l'induit principal (8) est déplacé, soient indépendantes l'une de l'autre, et
- l'induit de commande pilote (4) est logé au moins en partie dans l'induit principal (8) de façon concentrique à celui-ci,
vanne **caractérisée par**
un second ressort de compression (26) qui agit dans le sens de la fermeture (S) sur l'induit principal (8) ou une pièce reliée à celui-ci.

2. Vanne de gaz de haute pression (1) selon la revendication 1,
**caractérisée en ce que**
l'induit de commande pilote (4) a un premier entrefer de travail (14) ayant une première hauteur d'intervalle (h₁) et l'induit principal (8) a un second entrefer de travail (15) avec une seconde hauteur d'intervalle (h₂), le premier et le second entrefer de travail (14, 15) ayant des hauteurs différentes (h₁, h₂).

3. Vanne de gaz de haute pression (1) selon la revendication 2,
**caractérisée en ce que**
la première hauteur d'entrefer (h1) est inférieure à la seconde hauteur d'entrefer (h2).

4. Vanne de gaz de haute pression (1) selon la revendication 2,
**caractérisée en ce que**
la première hauteur d'entrefer (h1) est supérieure à la seconde hauteur d'entrefer (h2).

5. Vanne de gaz de haute pression (1) selon l'une des revendications précédentes,
**caractérisée en ce que**
l'induit de commande pilote (4) est guidé dans l'induit principal (8).

6. Vanne de gaz de haute pression (1) selon l'une des revendications 2 à 4,
**caractérisée en ce que**
le premier entrefer de travail (14) et le second entrefer de travail (15) sont magnétiquement parallèles.

7. Vanne de gaz de haute pression (1) selon l'une des revendications précédentes,
**caractérisée en ce que**
l'induit principal (8) ou l'induit principal (8) et l'induit de commande pilote (4) sont logés et montés dans un tube de pression (18).

8. Vanne de gaz de haute pression (1) selon la revendication 7,
**caractérisée en ce que**
le tube de pression (18) est réalisé en une matière non magnétique.

9. Vanne de gaz de haute pression (1) selon la revendication 7,
**caractérisée en ce que**
le tube de pression (18) est réalisé en une matière magnéto-conductrice et comporte au moins une installation pour guider un flux magnétique, notamment un cône (20).

10. Vanne de gaz de haute pression (1) selon l'une des revendications précédentes,
**caractérisée en ce que**
l'orifice de commande pilote (5) est un perçage et ayant, de préférence, un diamètre (d) de quelques dixièmes de millimètres, de préférence il est compris entre 0,2 mm et 1,2 mm.

11. Vanne de gaz de haute pression (1) selon l'une des revendications 2 à 10,
**caractérisée en ce que**
le premier entrefer de travail (14) a une surface à activité magnétique correspondant à entre 20% et 200% de la surface à activité magnétique du second entrefer de travail (15), les surfaces étant de préférence sensiblement égales.

12. Vanne de gaz de haute pression (1) selon l'une des revendications 3 à 10,
**caractérisée en ce que**
la première hauteur (h1) est comprise entre 0,1 mm et 1,0 mm et la seconde hauteur (h2) est comprise entre 0,3 mm et 2,0 mm.

13. Vanne de gaz de haute pression (1) selon l'une des revendications 4 à 12,
**caractérisée en ce que**
les ressorts de compression (24, 26), la bobine (12) et les induits (4, 8) sont accordés pour qu'une chute de pression sur le côté basse pression (N), ferme l'induit principal (8) et laisse ouvert l'induit de commande pilote (4).
